Europäisches Patentamt

European Patent Office

Office européen des brevets

(11) Publication number: **0 192 887**
**A2**

# EUROPEAN PATENT APPLICATION

(21) Application number: **85308467.1**

(22) Date of filing: **21.11.85**

(51) Int. Cl.⁴: **G 02 F 1/01**

(30) Priority: **27.02.85 US 706223**

(43) Date of publication of application:
**03.09.86 Bulletin 86/36**

(84) Designated Contracting States:
**AT BE CH DE FR GB IT LI LU NL SE**

(71) Applicant: **Litton Systems, Inc.**
**360 North Crescent Drive**
**Beverly Hills California 90210(US)**

(72) Inventor: **Hall, David B.**
**5165 Finehill**
**La Crescenta California 91214(US)**

(74) Representative: **Rushton, Ronald et al,**
**SOMMERVILLE & RUSHTON 11 Holywell Hill**
**St. Albans Hertfordshire AL1 1EZ(GB)**

(54) Fiber optic phase modulator.

(57) A fiber optic phase modulator produces a pure phase modulation in a signal propagating along a standard low birefringence optical fiber without producing an accompanying change in the polarization of the signal. A pair of fiber squeezers under the control of an oscillator apply two in-phase perpendicular forces to the fiber. Changes in length and changes in the refractive indices of the compressed fiber in each squeezer cause a phase difference and a polarization change between the input and output signals. The changes in the phase of the signal caused by the stresses resulting from the perpendicular compressions are cumulative while the polarization changes are equal and opposite. The phase modulator includes a transducer capable of applying forces to the fiber at high frequencies such that the phase modulator is suitable for use in fiber optic systems such as optical gyroscopes and other interferometric sensors.

FIG. 1

1

## FIBER OPTIC PHASE MODULATOR

### Background of the Invention

This invention relates generally to apparatus and methods for modulating the phase of an electromagnetic wave and particularly to apparatus and methods for use in fiber optic systems to produce an output signal that is a phase modulated version of an input signal.

Phase modulation of a light beam propagated by an optical fiber at modulation frequencies in the 1 MHz range and above is desirable in applications such as fiber optic gyroscopes, heterodyning, active compensators and other devices. The standard component used for phase modulation in fiber optic systems comprises a hollow cylinder formed of a piezoelectric material. A length of optical fiber is wrapped around the cylinder so that application of a voltage across the piezoelectric material causes it to expand, stretching the fiber. The transit time of the fiber is greater when the fiber is stretched than when the fiber is its normal length. The effect of an increased transit time is a change in the phase of the wave output from the fiber. Although the increased transit time causes most of the phase change of light guided by the fiber, stretching the fiber also has an effect on the phase of the output wave because stretching the fiber changes its refractive indices by means of the well-known elasto-optic interaction. The elasto-optic interaction is characterized by changes the refractive indices of a substance in response to elastic deformations. A change in the refractive indices of the fiber changes the velocity of propagation of light therethrough and, consequently, changes the phase and polarization of an optical signal propagating along the fiber.

Some fiber optic devices may require pure phase modulation of optical signals at modulation frequencies up to 100 MHz or higher. Prior art phase modulators for use with optical fibers produce both a polarization change and a change in the phase of light guided by the fiber. Such devices may require concurrent use of a polarization controller to restore the polarization to a predefined condition.

A piezoelectric cylinder cannot be modulated at the required frequencies, such as 100 MHz, because the cylinder cannot respond with the dimensional changes required for phase modulation if the frequency of the modulating signal is above approximately 1 MHz.

An acousto-optic all fiber modulator in which a length of fiber is placed between a pair of piezoelectric plates that are driven with an electrical signal at the desired modulation frequency has been disclosed. DePaula, et al., Acousto-Optic All-Fiber Modulator, SPIE Vol. 425, Single Mode Optical Fibers. The plates are driven so that they apply high frequency forces to the fiber. Squeezing the fiber using the piezoelectric plates results in both polarization modulation and phase modulation through the mechanism of the photoelastic effect associated with the strains in the deformed fiber.

In some applications, such as fiber optic gyroscopes and Mach-Zehnder interferometric sensors, which have operational characteristics that are highly polarization-dependent, simultaneous polarization modulation and phase modulation are detrimental to

0192887

3

system operation. Use of a polarization maintaining fiber with its polarization axis aligned parallel to the plane of the modulating plates yields a pure phase modulation in the light guided by the fiber. However, there are many applications in which the use of ordinary standard optical fiber is preferable; and, therefore, there is a need in the art for a high frequency pure phase modulator for use with such fibers.

### Summary of the Invention

The present invention provides a fiber optic phase modulator that produces a pure phase modulation in an optical signal propagating along a standard optical fiber without producing a concomitant modulation of the polarization of the signal. The present invention employs a pair of fiber squeezers that are driven in phase by an oscillator. The fiber squeezers are oriented to apply two mutually perpendicular squeezes to the fiber. The fiber squeezers are closely spaced along the length of the fiber, which is preferably a low birefringence fiber, so that the length of fiber between the squeezers introduces no appreciable polarization change in the optical signal. Squeezing an ordinary optical fiber orients the principal axes of the fiber such than a first axis is perpendicular to the direction of the applied compressive force and a second axis is parallel to the direction of the applied compressive force. An input optical signal of arbitrary polarization experiences a first phase modulation and an accompanying polarization modulation as it propagates along the portion of the fiber retained in the first squeezer. While propagating

4

through the portion of the fiber retained within the second fiber squeezer, the signal experiences a second polarization modulation that is opposite to the first polarization modulation and an additional phase modulation. The output of the second fiber squeezer, therefore, has the same polarization as the input signal to the first fiber squeezer, but is shifted in phase.

The present invention may employ any fiber squeezer that produces compression adequate to provide the desired amount of phase modulation. A preferred embodiment of the phase modulator of the invention uses a pair of fiber squeezers that each include at least one piezoelectric plate and appropriate electrodes and circuitry for applying modulating voltages across the plate. A length of fiber optic material is retained between the piezoelectric material and a substrate such that application of the modulating voltage to the piezoelectric material applies high frequency compressive forces to the fiber.

The fiber squeezer may include a pair of confronting piezoelectric plates between which the fiber may be bonded by a suitable adhesive. The plates may be held apart by suitable spacers so that when the plates are urged toward one another, diametrically opposite forces are applied to the fiber. The portion of the fiber that is between the plates may include a thin metallic coating, which helps to prevent the fiber from fracturing. The plates may be formed of quartz, but a variety of other piezoelectric materials, such as lead metaniobate or PZT, function satisfactorily in many applications. The use of piezoelectric plates to form the fiber squeezers permits the application of a force to the fiber adequate to produce a phase shift suitable for applications in fiber optic devices such as gyroscopes and interferometric sensors.

The fiber squeezers employed in the present invention permit phase modulation at frequencies that are much higher than are possible with the hollow piezoelectric cylinder phase modulator because the thin, relatively low-mass transducers used to apply the compressive forces to the fiber are capable of applying time varying squeezes to the small lengths of the fiber at greater frequencies than the frequencies at which the larger, more massive cylinder is capable of changing the length of a longer fiber.

Brief Description of the Drawings

Figure 1 is a schematic representation of the phase modulator of the present invention including a length of standard optical fiber and a pair of fiber squeezers for applying perpendicular compressive forces to the fiber;

Figure 2 is a perspective view of a first type of fiber squeezer that may be included in the phase modulator of Figure 1 showing an optical fiber retained between a pair of piezoelectric plates;

Figure 3 is a cross sectional view of a standard optical fiber having diametrically opposed compressive forces applied thereto;

Figure 4 is a perspective view of a second type of fiber squeezer that may be included in the phase modulator of Figure 1 showing a fiber retained in a support structure having piezoelectric

6

transducers affixed to two perpendicular faces of the blocks; and

Figure 5 is an end elevation view of the fiber squeezer of Figure 4 showing the fiber and an acoustic impedance matching material between the support blocks and the piezoelectric transducers attached to two perpendicular surfaces of one of the blocks.

## Description of the Preferred Embodiment

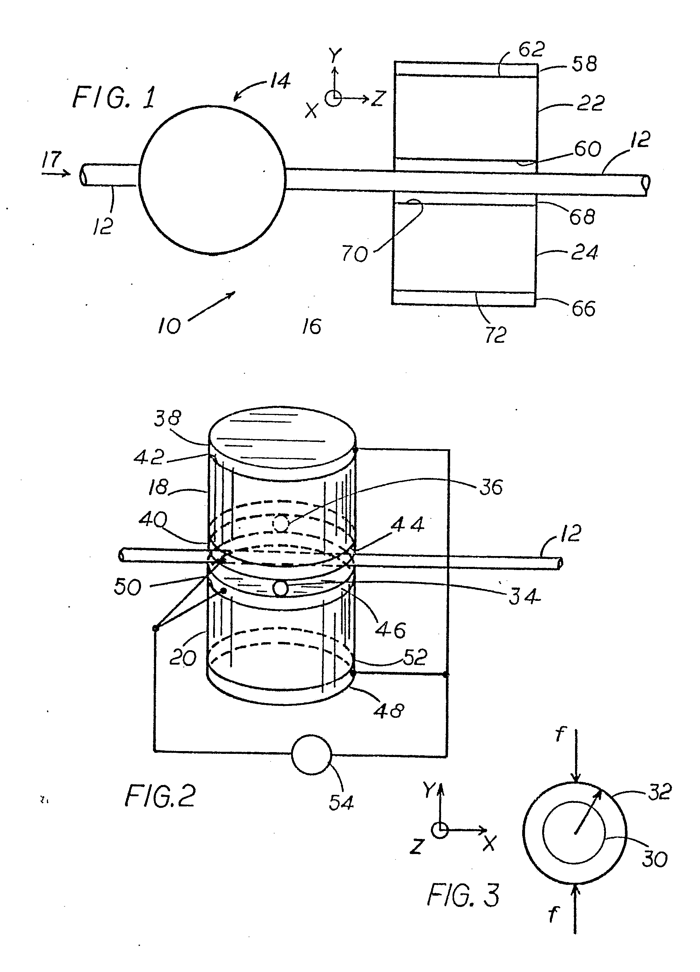

Referring to Figure 1, a fiber optic phase modulator 10 includes a length of optical fiber 12, a first fiber squeezer 14 and a second fiber squeezer 16. The fiber squeezers 14 and 16 are closely spaced along the fiber 12 and are oriented to apply mutually perpendicular compressive forces to the fiber 12. Referring to the coordinate system shown in Figure 1 wherein the x-axis points into the plane of the page and the y-axis and z-axis point toward the upper and right sides of the sheet, respectively, the fiber squeezer 14 applies a compressive force to the fiber 12 along the x-axis; and the fiber squeezer 16 applies a compressive force to the fiber 12 along the y-axis. The length of the fiber 12 is along the z-axis, and it is assumed that light is incident from the left as indicated by the arrow 17.

Referring to Figures 1 and 2, the squeezer 14 comprises a pair of plates 18 and 20 that are preferably formed of a piezoelectric material, such as quartz or lead metaniobate. The squeezer 16 similarly comprises a pair of plates 22 and 24 that are also formed of a piezoelectric material. The piezoelectric plates 18, 20, 22, and 24

7

are shown with their lengths in exaggerated proportion to their widths for clarity of illustration of the structure of the invention.

Referring to Figure 2, the structures of the squeezers 14 and 16 are shown in greater detail than in Figure 1. Since both squeezers 14 and 16 have substantially identical structures, only the squeezer 14 is shown in Figure 2 and described in detail herein. The plates 18 and 20 may be held apart by a pair of spacers 34 and 36 positioned on opposite sides of the fiber 12 to ensure that the plates 18 and 20 are always parallel so as to contact the fiber 12 at points that are diametrically opposed. The spacers 34 and 36 may conveniently be lengths of optical fiber placed between the plates 18 and 20.

It is well-known that application of a voltage across a piezoelectric material causes the material to expand or contract, depending upon the polarity of the voltage relative to the material. Referring to Figure 2, the plate 18 of the fiber squeezer 14 has a pair of electrodes 38 and 40 attached to its opposite ends 42 and 44, respectively. Similarly, the plate 20 has a pair of electrodes 46 and 48 attached to its opposite ends 50 and 52, respectively. An oscillator 54 has outputs connected to the outer end electrodes 38 and 48. The electrodes 40 and 46, which face one another, are preferably grounded.

Referring again to Figure 1, the plate 22 of the fiber squeezer 16 has a pair of electrodes 58 and 60 attached to its opposite ends 62 and 64, respectively. Similarly, the plate 24 has a pair of electrodes 66 and 68 attached to its opposite ends 70 and 72, respectively. The oscillator 54 is connected to the outer end electrodes 58 and 66 and the inner electrodes 60 and 68 of the squeezer 16 in a manner similar to that described above with reference to Figure 2 for the squeezer 14.

The output signal of the oscillator 54 is preferably a sinusoid. The oscillator voltage is applied across the pairs of electrodes 38, 40; 46, 48; 58, 60; and 66, 68 so that the piezoelectric plates 18, 20, 22 and 24 are driven in phase. Application of the in phase voltages across the plates 18, 20, 22 and 24 causes two perpendicular compressive deformations of the fiber 12.

As shown in Figure 3, the fiber 12 has a core 30 and a surrounding cladding 32. The core 30 is shown in an exaggerated scale relative to the cladding 32 for clarity of illustration. When no compressive force is applied to the fiber 12, the core 30 and cladding 32 are substantially circular in cross section. Application of a compressive force f to opposite sides of the fiber 12 causes a small deformation of the core 30 and cladding 32. The deformation causes the core and cladding cross sections to become slightly elliptical. The compressive force f of the plates 18 and 20 is applied directly to the cladding 32 and transmitted therethrough to the core 30. Deformation of the core 30 is of primary interest in forming the phase modulator 10. Core deformation is essential to producing the changes in the refractive indices parallel and perpendicular to the direction of propagation required for phase modulation because the light guided by the fiber 12 exists primarily in the core 30.

At high modulation frequencies, where the acoustic wavelength in the fiber is much smaller than the length of the fiber being deformed, phase modulation in the optical fiber 12 occurs because compression of the core 30 changes the core refractive indices. The velocity of propagation of light in the fiber 12 depends upon the refractive indices. The wave output from the phase shifter 10, after the propagation velocity has changed, is shifted in phase from the input wave. The length of the fiber 12 in each squeezer 14, 16 may be about one centimeter. At a modulation frequency of 100 MHz, the acoustic wavelength is about 30 μ, which is less than the fiber diameter. At such frequencies, changes in the length of the fiber 12 cause no appreciable phase modulation because the fiber 12 is unable to respond with the dimensional changes required for phase modulation.

At low modulation frequencies, where the acoustic wavelength is on the order of or greater than the length of the fiber 12 being squeezed, phase modulation occurs primarily because of changes in the length of the fiber 12 as the two perpendicular squeezes are alternately applied and removed. At intermediate frequencies, both length changes and refractive index changes caused by squeezing the fiber 12 contribute to changes in phase of a light signal propagating therein.

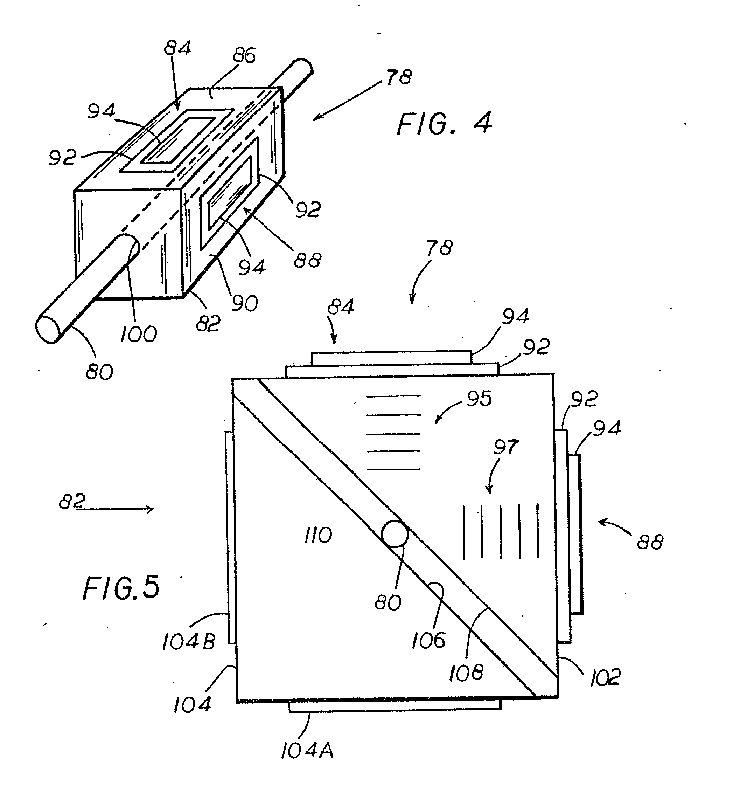

Referring to Figure 4, a pure phase modulator 78 according to the invention includes an optical fiber 80 retained within a generally

10

rectangular support structure 82 formed of a material such as $SiO_2$. A first piezoelectric transducer 84 is attached to a surface 86 of the support structure 82, and a second piezoelectric transducer 88 is attached to a surface 90 that is perpendicular to the surface 86. The piezoelectric transducers 84, 88 may each comprise a lithium niobate platelet 92 with a suitable electrode 94 attached thereto for applying modulating signals to the lithium niobate platelets 92 to launch acoustic waves in the support structure 82.

The acoustic waves, represented by the wavefront lines 95 and 97 of Figure 5, apply time-varying forces to the fiber 80. The distances from the piezoelectric transducers 84 and 88 to the fiber 80 are preferably identical so that when the transducers 84 and 88 are driven in phase, the wavefronts 95 and 97 impinging upon the fiber 80 are in phase. In practice it may be difficult to form the support structure 82 so that the distances between the piezoelectric transducers 84 and 88 are identical. In order to assure that the acoustic wavefronts 95 and 97 strike the fiber 80 in phase, the polarization of a light signal output from the phase modulator 78 should be compared to the polarization of a light signal input thereto. If the polarizations of the the input and output signals are not identical, then the phases of the electrical signals driving the piezoelectric transducers may be adjusted to make the polarization of the output identical to the polarization of the input to provide a purely phase modulated output from the phase modulator 78.

11

The optical fiber 80 may be inserted into a passage 100 drilled in the support structure 82, or the support structure 100 may be formed of a pair of blocks 102, 104 as shown in Figures 4 and 5. The blocks 102, 104 may have generally triangular cross sections, as best shown in Figure 5. The fiber 80 is retained between opposing surfaces 106, 108 of the blocks 102, 104, respectively. A layer 110 of a material such as tin or aluminum may be placed between the surfaces 106, 108 to provide good acoustic impedance matching at the surfaces to prevent reflections of the wavefronts 95, 97 back toward the piezoelectric transducers 84 and 88. The transducers 84 and 88 are preferably mounted on perpendicular surfaces on the block 102, which is preferably formed of $SiO_2$. The block 104 may be formed of any suitable acoustic wave absorbing material. If the block 104 is an acoustic absorber, then it may be necessary to roughen surfaces 104A and 104B to prevent reflections of acoustic waves toward the fiber 80. Each of the surfaces 104A, 104B may have an acoustic absorber 105A, 105B, respectively, mounted thereon to absorb the acoustic waves to prevent reflections.

If the platelets 92 of piezoelectric transducers 84 and 88 comprise lithium niobate, then the phase modulator 78 is capable of providing modulation at frequencies ranging from about 100-500 MHz for optical signals propagating in the fiber 80. The magnitude of the resulting phase modulation depends upon the amount of power used to drive the piezoelectric transducers. The platelets 92 may be formed

12

of another material such as PZT to provide lower modulation at frequencies.

The pure phase modulators of the present invention have been described herein with reference to particular preferred embodiments. The pure phase modulators 10 and 78 employ specific means for applying forces to the optical fiber 12 and 80. However, the present invention is not limited to the use of any specific type of fiber squeezer. The particular type of fiber squeezer employed may depend upon the desired range of modulation frequencies and the amount of phase modulation desired. Several types of fiber squeezers that may be useful in forming a phase modulator according to the invention are described by J.L. Brooks et al., "Active Polarization Coupler for Birefringent Fiber" Optics Letters, Vol. 9, No. 6, June, 1984. Those skilled in the art may devise other fiber squeezers that will function satisfactorily to produce a pure phase modulator according to the invention as defined in the claims appended hereto.

The pure phase modulators 10 and 78 of the invention can conveniently be described mathematically to explain how they produce a pure phase modulated output. For convenience of explanation, the following description refers to the structure of the fiber optic pure phase modulator 10. A light wave may be represented by a time-varying field comprising orthogonal electric field vectors having a frequency equal to the optical frequency. The polarization of a wave is generally referred to as the direction of the electric field vector in a light wave. Referring again to Figure 1, it is convenient to

13

represent an input light signal of arbitrary polarization to the squeezer 14 in matrix form as

$$
\begin{bmatrix} E_x \\ E_y \end{bmatrix}_{in} = \begin{bmatrix} Ae^{i\varphi} \\ Be^{-i\varphi} \end{bmatrix} e^{i\omega t}. \tag{1}
$$

In Equation (1) $E_x$ and $E_y$ represent the electric field components of an optical wave guided by the fiber, A and B are arbitrary amplitude constants, $\varphi$ is half the phase difference between $E_x$ and $E_y$ and $\omega$ is the frequency of the optical signal.

The effect of the squeezer 14 on the input light signal may be represented in Jones matrix form as

$$
S_1 = \begin{bmatrix} e^{i\Gamma\cos\Omega t} & 0 \\ 0 & e^{iK\cos\Omega t} \end{bmatrix}, \tag{2}
$$

where $S_1$ is the Jones matrix of the fiber squeezer 14, $\Omega$ is the modulation frequency and $\Gamma$ and $K$ are phase changes induced in the field components $E_x$ and $E_y$ by the fiber squeezer 14. The cross terms of the Jones matrix are zero because the principal axes of birefringence are assumed to be aligned with the directions in which stresses are applied to the fiber 12. The squeezer 14 induces

14

principal axes of birefringence having different phase shifts and K. The squeezer 16 is oriented at $90^{\circ}$ relative to the squeezer and is otherwise substantially identical thereto. The Jones matrix for the squeezer 16 is, therefore,

$$S_2 = \begin{bmatrix} e^{iK\cos\Omega t} & 0 \\ 0 & e^{i\cos\Omega t} \end{bmatrix} \qquad (3)$$

The $90^{\circ}$ orientation of the squeezers 14 and 16 produces an inversion of the phase shifts in going from the squeezer 14 to the squeezer 16. The output signal of the fiber squeezer 16 as a function of the signal input to the squeezer 14 is found by first multiplying the matrix of the input signal by the matrix of the squeezer 14 and then multiplying that result by the matrix of the squeezer 16. The output signal of the squeezer 16 is therefore

$$\begin{bmatrix} E_x \\ E_y \end{bmatrix}_{out} = S_1 S_2 \begin{bmatrix} E_x \\ E_y \end{bmatrix}_{in} \qquad (4)$$

$$= e^{i(\Gamma + K)\cos\Omega t} \begin{bmatrix} E_x \\ E_y \end{bmatrix}_{in} \qquad (5)$$

The fiber squeezer 14 causes a first polarization change in the optical signal, but the fiber squeezer 16 produces a second

15

polarization change that is equal and opposite to the first polarization change. Assuming that the state of polarization in the fiber 12 does not change over a distance of several inches, the electromagnetic field output from the squeezer 16 is a pure phase modulated version of the input to the squeezer 14.

The effects of the orthogonal fiber squeezers 14 and 16 being drive in phase may also be explained by examining the changes in phase and polarization of the components, $E_x$ and $E_y$, as they propagate through the phase modulator 10. Initially, the components may be represented as

$$E_x = A \cos [\omega t + \varphi] \tag{6}$$

and

$$E_y = B \cos [\omega t - \varphi]. \tag{7}$$

After propagating through the first fiber squeezer 14 the field components are

$$E_x = A \cos [\omega t + \varphi + \Gamma \cos \Omega t] \tag{8}$$

and

$$E_y = B \cos [\omega t - \varphi + K \cos \Omega t]. \tag{9}$$

The term $\Gamma \cos \Omega t$ in Equation (8) and the term $K \cos \Omega t$ in Equation (9) represent both phase changes and polarization changes in the field components $E_x$ and $E_y$ after the wave has propagated through only the fiber squeezer 14. After the optical signal has propagated through the second fiber squeezer 16, the field components are

16

$$E_x = A \cos [\omega t + \varphi + (\Gamma + K) \cos \Omega t] \quad (10)$$

and

$$E_y = B \cos [\omega t - \varphi + (K + \Gamma) \cos \Omega t]. \qquad (11)$$

Examination of Equations (10) and (11) reveals that the field components $E_x$ and $E_y$ output from the second fiber squeezer differ only in phase from the input wave represented by Equations (6) and (7). The field components have identical phase changes represented by the terms $(\Gamma + K) \cos \Omega t$ that appear in both equations (10) and (11).

Although the present invention has been described with reference to specific embodiments, it should be understood that these emobodiments are exemplary preferred embodiments and that modifications may be made without departing from the scope of the invention as defined in the appended claims.

0192887

17 .

## Claims

What is claimed is:

1. A fiber optic phase modulator for modulating the phase of an optical signal propagated by an optical fiber without changing the polarization of the optical signal, comprising:

first means for applying a first force to a first length of said optical fiber, said first force being directed along a first axis to produce a first phase modulation of the optical signal and a first change in polarization thereof; and

second means for applying a second force to a second length of said optical fiber, said second force being directed along a second axis perpendicular to said first axis, said second force producing a second phase modulation of the optical signal, said first and second phase modulations combining to produce a predetermined net phase modulation, said first and second polarization changes being equal and opposite such that the optical signal output from said second length of said optical fiber has a phase shift relative to the optical signal input to said first length of said optical fiber and has the same polarization as the input to said first length of said optical fiber.

2. The fiber optic phase modulator of claim 1 wherein said first and second means for applying forces to said optical fiber are positioned closely adjacent one another so that there is substantially no change in the polarization of said optical signal as it propagates from the first means for applying a force to the second means for applying a force.

3. The fiber optic phase modulator of claim 1 wherein at least one of said first means and said second means for applying a force to said optical fiber comprises:

a first plate of a piezoelectric material adjacent a first portion of said optical fiber;

a second plate of a piezoelectric material adjacent a second portion of said optical fiber substantially diametrically opposite said first plate such that a length of said optical fiber is retained between said first and second plates; and

means for applying modulating voltages across said first and second plates to apply forces to said optical fiber.

4. The fiber optic phase modulator according to claim 3 wherein said modulating voltages are applied across said first and second plates in phase.

5. The fiber optic phase modulator of claim 1 wherein at least one of said means for applying compressive forces comprises:

a support structure;

a length of optical fiber mounted in said support structure; and

a transducer mounted to said support structure for producing a first acoustic wave which impinges upon said length of optical fiber.

6. The fiber optic phase modulator of claim 5 further comprising a second transducer mounted to said support structure for producing a second acoustic wave which impinges upon said length of optical fiber, the direction of propagation of said second acoustic wave being orthogonal to the direction of propagation of said first acoustic wave.

7. A method of modulating the phase of a light signal propagating in an optical fiber without a net change in the polarization of the light signal, comprising the steps of:

controlling the refractive indices of a first length of the optical fiber along a first pair of axes perpendicular to the optical fiber to produce a first phase modulation and a first polarization change in the light signal; and

controlling the refractive indices of a second length of the optical fiber along a second pair of axes perpendicular to the optical fiber and rotated ninety degrees with respect to the first pair of axes to produce a second change in polarization in the signal, the second change in polarization being equal and opposite to the first polarization change to produce an optical signal output that is modulated in phase with respect to the light signal and of the same polarization as the light signal.

8. The method of claim 7 further including the steps of:

placing a first length of the optical fiber between a first pair of plates of a piezoelectric material;

placing a second length of the optical fiber between a second pair of plates of a piezoelectric material; and

driving the first and second pair of plates in phase with a modulating signal to apply two perpendicular forces to the optical fiber.

9. The method of claim 7 further including the steps of:

20

supporting the length of optical fiber on a substrate;

placing a first piezoelectric transducer on a first surface of the substrate to apply a first acoustic wave to the length of optical fiber; and

placing a second piezoelectric transducer on a second surface of the substrate perpendicular to the first surface to apply a second acoustic wave to the length of optical fiber such that the first and second acoustic waves are perpendicular to one another.

FIG. 1

FIG.2

FIG. 3

0192887

0192887

FIG. 4

FIG.5